# DEMANDE DE BREVET EUROPEEN

(11) **EP 1 724 700 A1**
(43) Date de publication de la demande: **22.11.2006**
(21) Numéro de dépôt: 06113716.2
(22) Date de dépôt: 09.05.2006
(51) Int. Cl.: G06F 21/00

(54) **Contrôle d'intégrité d'une mémoire externe à un processeur**

(30) Priorité: 10.05.2005 FR 0551199
(71) Demandeur: ST MICROELECTRONICS S.A., 92120 Montrouge (FR); PROTON WORLD INTERNATIONAL N.V., 1930 ZAVENTEM (BE)
(72) Inventeur: BARDOUILLET, Michel, 13790, ROUSSET (FR); ANGUILLE, Claude, 13320, BOUC BEL AIR (FR); DAEMEN, Joan, 3900, OVERPELT (BE)
(74) Mandataire: de Beaumont, Michel

(57) **Abrégé**

L'invention concerne un procédé d'enregistrement d'au moins un bloc d'informations variables (INFO) dans une première mémoire volatile (13) externe à un microprocesseur, consistant à calculer et à mémoriser une signature (MAC) numérique prenant en compte au moins partiellement l'adresse (ADDRESS) et le contenu dudit bloc d'information dans la mémoire, et au moins une première quantité numérique aléatoire (IRV) interne au microprocesseur.

## Description

### Domaine de l'invention

La présente invention concerne de façon générale, les circuits électroniques et plus particulièrement les microprocesseurs exploitant une mémoire externe. Par mémoire externe, on entend une mémoire reliée au processeur par des bus de communication accessibles, par exemple, à un éventuel fraudeur.

La présente invention s'applique plus particulièrement à la vérification de l'intégrité (de l'absence de modification entre leur écriture et leur lecture) d'informations contenues dans une mémoire volatile externe pour traitement par un microprocesseur.

### Exposé de l'art antérieur

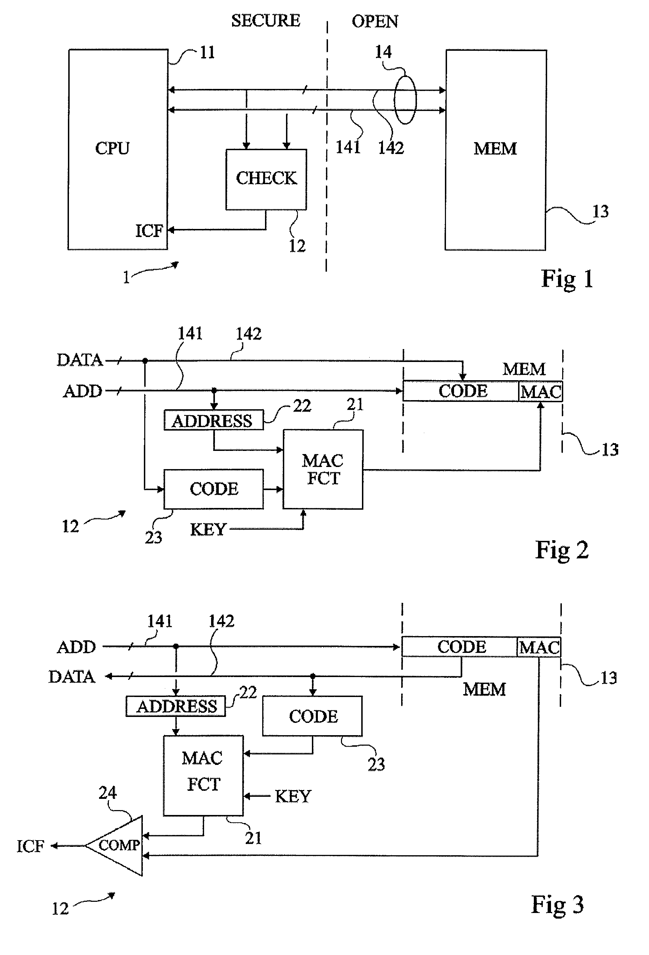

La figure 1 représente, de façon très schématique et sous forme de blocs, un exemple d'architecture du type auquel s'applique la présente invention. Un microprocesseur 1 comporte entre autres, une unité centrale de traitement 11 (CPU) et, dans le domaine d'application de l'invention, un élément 12 (CHECK) de vérification de l'intégrité de données lues par le microprocesseur dans une mémoire 13 à l'extérieur du circuit 1. Le microprocesseur 1 communique avec la mémoire 13 (et d'autres éléments non représentés) par plusieurs bus 14 parmi lesquels un bus d'adresses 141, un bus de données 142 et un bus de commande non représenté. La mémoire 13 est une mémoire vive, dite mémoire de travail, dans laquelle sont stockées des informations permettant au microprocesseur d'exécuter un programme. Il peut s'agir de variables écrites et lues par le processeur 1 au cours d'une session de fonctionnement, ou d'instructions de programme transitant par cette mémoire de travail depuis une mémoire morte (non représentée) pour leur exécution. On considère que l'unité centrale 11 et le contrôleur d'intégrité 12 sont dans une zone sûre (SECURE) du microprocesseur, c'est-à-dire que les informations transitant dans cette zone (ou restant à l'intérieur de celle-ci) n'ont pas besoin d'être vérifiées du point de vue de leur intégrité. Par contre, on considère la mémoire 13 dans un environnement non sécurisé ou ouvert (OPEN), ce qui justifie le besoin de vérifier que des données qui ont été écrites dans cette mémoire 13 sont bien identiques lors de leur lecture.

Une différence entre les données écrites et lues peut provenir soit d'une tentative de fraude par un pirate éventuel, soit d'un dysfonctionnement accidentel. Dans les deux cas, il est utile que le microprocesseur 1 soit capable de détecter que les données qu'il s'apprête à traiter ne correspondent pas à celles auxquelles il s'attend.

Une première solution connue pour vérifier l'intégrité du contenu d'une mémoire lue par un microprocesseur est connue sous le nom CRC (Cyclique Redundancy Check) et consiste à mémoriser, avec le contenu d'un bloc dans la mémoire, une valeur représentative de ce contenu. Cette valeur est ensuite vérifiée lors de la lecture pour détecter d'éventuelles erreurs dans le contenu du bloc mémoire. Une telle solution peut être efficace pour détecter des erreurs accidentelles mais n'est pas efficace contre un éventuel piratage, car il suffit au fraudeur de connaître le mode de calcul de la valeur représentative du contenu pour être en mesure de forcer le système avec des données erronées, accompagnées d'une valeur que le fraudeur aura calculé lui-même et qui sera admise par le système.

Une deuxième solution connue consiste à chiffrer l'ensemble du contenu de la mémoire au moyen d'un algorithme de chiffrement exécuté par le microprocesseur. Lors de la lecture, les informations extraites de la mémoire sont alors déchiffrées par le microprocesseur. Une telle solution n'empêche pas l'introduction d'informations erronées, par exemple lors d'une tentative de fraude par injection de faute dans l'exécution du programme, car les données ou instructions seront de toute façon déchiffrées par le processeur.

Une troisième solution est basée sur un calcul de codes d'authentification de message (MAC ou Message Authentification Code) ou signatures numériques, et consiste à calculer le résultat d'un algorithme de chiffrement par bloc exploitant entre autres, une quantité secrète connue du seul microprocesseur.

La figure 2 illustre, de façon très schématique et sous forme de blocs, le fonctionnement d'un exemple de contrôleur d'intégrité 12 de ce type, lors de l'écriture d'un bloc de programme (CODE) dans la mémoire 13. Pour simplifier, l'unité centrale de traitement et autres constituants du microprocesseur n'ont pas été représentés en figure 2.

La figure 3 illustre le fonctionnement d'un tel contrôleur d'intégrité lors de la lecture d'un bloc de programme (CODE) dans cette même mémoire.

Le contrôleur d'intégrité 12 comporte un élément 21 (MAC FCT) de calcul d'un code d'authentification (signature) MAC à partir du contenu CODE du bloc mémoire, de son adresse physique ADDRESS de stockage dans la mémoire 13 et d'une clé KEY. L'adresse de stockage dans la mémoire 13 est lue sur le bus d'adresse 141 (ADD) et stockée, par exemple, dans un registre temporaire 22 du contrôleur d'intégrité. Le bloc d'informations devant être stocké à cette adresse est lu sur le bus de données 142 (DATA) et est stocké temporairement, par exemple, dans un ou plusieurs registres 23 du contrôleur d'intégrité. La clé KEY provient de circuits internes au microprocesseur et correspond, par exemple, à une clé secrète modifiée à chaque nouvelle session (nouvelle exécution) du programme.

En écriture (figure 2), le contrôleur d'intégrité calcule, à partir de l'adresse, du bloc à stocker et de la clé, un code MAC et ce code est stocké dans la mémoire 13 en même temps que le code lui-même.

Lors de la lecture (figure 3), le contrôleur d'intégrité 12 recalcule un code d'authentification MAC à partir de l'adresse de lecture, du contenu du bloc lu dans la mémoire et de la clé, puis compare (comparateur 24 - COMP) ce code MAC par rapport à celui contenu dans la mémoire 13. Le résultat de cette comparaison fournit un indicateur (ICF ou Integrity Check Flag) à l'unité centrale (11, figure 1) permettant à celle-ci de prendre les mesures appropriées en cas d'erreur volontaire ou involontaire. Ces mesures sont, par exemple, un blocage du circuit intégré 1, un effacement des quantités secrètes contenues dans le circuit 1, etc.

La description ci-dessus est fonctionnelle et le contrôleur d'intégrité est en pratique un programme exécuté par le microprocesseur en utilisant ses opérateurs et registres habituels. En particulier, les tailles respectives des registres 22 et 23 dépendent de la rapidité de traitement du contrôleur d'intégrité par rapport aux besoins de l'unité centrale. Il s'agit généralement de banques de registres de type FIFO.

Un inconvénient de la solution décrite en relation avec les figures 2 et 3 et qu'elle est, en pratique, dédiée à la vérification d'intégrité d'instructions de programme et reste faillible pour des données variables. En effet, alors que la double exécution d'une ligne de code par un attaquant éventuel ne présente pas d'intérêt en terme de découverte de quantités secrètes, le fait d'appliquer plusieurs fois consécutives une même donnée à un algorithme peut permettre à un fraudeur d'exploiter les résultats pour pirater certaines données. C'est le cas par exemple d'une valeur de compteur stockée en mémoire externe par le microprocesseur. Un tel compteur utilisé dans une boucle d'un algorithme qu'un fraudeur cherche à pirater lui permet de forcer le programme à rester dans la boucle. Un défaut d'intégrité ne sera pas détecté dans la mesure où la valeur du compteur et sa signature lus en mémoire sont corrects.

### Résumé de l'invention

La présente invention vise à pallier tout ou partie des inconvénients des procédés et dispositifs connus de contrôle d'intégrité du contenu d'une mémoire externe à un microprocesseur.

La présente invention vise plus particulièrement à proposer une solution qui permette de vérifier à la fois l'intégrité des données variables stockées dans la mémoire externe et des informations fixes (par exemple, des instructions d'un programme) stockées dans cette mémoire.

La présente invention vise également à proposer une solution qui soit compatible avec des algorithmes habituels de calcul de code d'authentification (MAC ou équivalent).

L'invention vise également à proposer une solution particulièrement adaptée à une mémoire externe de type mémoire vive.

L'invention vise en outre à proposer une solution compatible avec l'utilisation de clés de sessions dans l'exécution d'un programme par le microprocesseur.

Pour atteindre tout ou partie de ces objets ainsi que d'autres, la présente invention prévoit un procédé d'enregistrement d'au moins un bloc d'informations variables dans une première mémoire volatile externe à un microprocesseur, consistant à calculer et à mémoriser une signature numérique prenant en compte :
au moins partiellement l'adresse et le contenu dudit bloc d'information dans la mémoire ; et
au moins une première quantité numérique aléatoire interne au microprocesseur.

Selon un mode de mise en oeuvre de la présente invention, une signature numérique d'au moins un bloc d'informations non variables à stocker dans la première mémoire prend en compte, à la place de ladite première quantité, au moins une deuxième quantité numérique fixe.

Selon un mode de mise en oeuvre de la présente invention, ladite quantité aléatoire est générée de façon aléatoire à chaque mise à jour dudit bloc d'informations variables dans la première mémoire.

Selon un mode de mise en oeuvre de la présente invention, ladite quantité aléatoire est stockée de façon volatile dans le microprocesseur.

Selon un mode de mise en oeuvre de la présente invention, ladite signature est stockée, avec ledit bloc d'informations, dans la mémoire externe.

Selon un mode de mise en oeuvre de la présente invention, ladite signature est stockée de façon volatile dans le microprocesseur.

Selon un mode de mise en oeuvre de la présente invention, ladite signature prend en outre en compte une clé numérique modifiée à chaque nouvelle session d'un même programme exécuté par le microprocesseur et/ou à chaque initialisation de ce dernier.

L'invention prévoit également un procédé de vérification du contenu d'au moins un bloc d'informations lu dans une mémoire volatile externe à un microprocesseur, consistant à comparer une signature mémorisée lors de l'enregistrement dudit bloc, à une signature courante.

L'invention prévoit également un microprocesseur comportant des moyens de calcul de signature pour stockage d'un bloc d'informations dans une mémoire volatile externe au microprocesseur.

### Brève description des dessins

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
la figure 1 qui a été décrite précédemment représente un exemple classique d'architecture de microprocesseur et de mémoire externe du type auquel s'applique la présente invention ;
la figure 2 illustre, de façon très schématique, le fonctionnement en écriture d'un exemple de contrôleur d'intégrité classique ;
la figure 3 illustre, de façon très schématique le fonctionnement en lecture d'un exemple de contrôleur d'intégrité classique ;

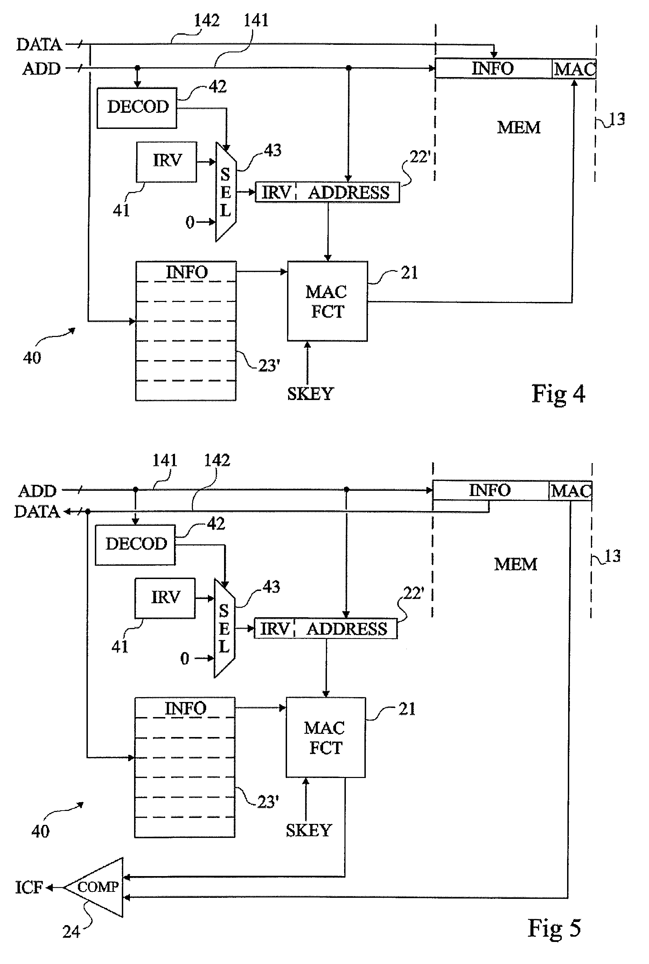

la figure 4 illustre, de façon très schématique et sous forme de blocs, le fonctionnement d'un mode de réalisation d'un contrôleur d'intégrité en écriture de données dans une mémoire externe à un microprocesseur selon la présente invention ; et
la figure 5 représente, de façon très schématique et sous forme de blocs, le fonctionnement d'un mode de réalisation d'un contrôleur d'intégrité en lecture de données dans une mémoire externe à un microprocesseur selon la présente invention.

Les mêmes éléments ont été désignés par les mêmes références aux différentes figures. Pour des raisons de clarté, seuls les étapes de procédé et éléments de circuit qui sont utiles à la compréhension de l'invention ont été représentés aux figures et seront décrit par la suite. En particulier, les détails constitutifs du microprocesseur n'ont pas été représentés, l'invention étant compatible avec tout microprocesseur classique. De même, les systèmes d'adressage et d'exploitation d'informations lues ou écrites dans une mémoire externe par un microprocesseur n'ont pas été détaillés, l'invention étant là encore compatible avec les systèmes classiques.

### Description détaillée

Une caractéristique d'un mode de réalisation de la présente invention est de rendre une signature ou empreinte (code d'authentification), associée à une variable devant être stockée dans une mémoire externe à un microprocesseur, dépendante d'une quantité aléatoire conservée par le microprocesseur.

Une autre caractéristique d'un mode de réalisation de l'invention est de générer cette quantité aléatoire à chaque mise à jour demandée d'un même bloc dans la mémoire externe.

La figure 4 représente, de façon très schématique et sous forme de blocs, par une vue à rapprocher de la figure 2, un mode de réalisation fonctionnel d'un contrôleur d'intégrité 40 selon la présente invention dans une phase d'écriture d'informations dans une mémoire volatile 13 (MEM) externe à un microprocesseur. Pour simplifier, seule la mémoire 13 et les éléments fonctionnels 40 du contrôleur d'intégrité du microprocesseur ont été représentés.

Comme précédemment, le contrôle d'intégrité prévu par l'invention exploite un élément 21 de calcul d'un code d'authentification (MAC FCT) ou plus généralement d'une empreinte ou signature prenant en compte, au moins en partie, le contenu du bloc de données INFO à stocker dans la mémoire 13 et son adresse physique (ADDRESS) dans cette mémoire 13. L'adresse ADDRESS (ou la partie d'adresse) est extraite d'un bus d'adresses 141 (ADD) et le bloc de données INFO (ou la partie du bloc) d'un bus de données 142 (DATA), tous deux reliant au moins le microprocesseur à la mémoire. Les blocs de données INFO et les adresses ADDRESS transitent, comme précédemment, par des registres de stockage temporaire 22' et 23' du microprocesseur.

De préférence, le calcul d'empreinte 21 tient également compte d'une clé SKEY, par exemple, une clé de session qui change à chaque nouvelle exécution d'un même programme ou à chaque réinitialisation du microprocesseur.

Selon ce mode de réalisation de l'invention, la fonction 21 de calcul d'empreinte tient également compte, lorsque les informations INFO du bloc sont des données variables, d'une quantité aléatoire interne (bloc 41, IRV). Dans le cas où les informations INFO du bloc sont des instructions (code) d'un programme, cette grandeur aléatoire n'est, de préférence, pas prise en compte. Pour ce faire, un élément 42 (DECOD) détecte, à partir de l'adresse présente sur le bus 141, si la zone mémoire adressée correspond à du code programme ou à des variables exploitées par ce programme. Le résultat de ce décodeur 42 sert à sélectionner une de deux entrées d'un sélecteur 43 (SEL) entre la quantité aléatoire IRV et une quantité fixe (par exemple, 0). La quantité sélectionnée par l'élément 43 est, par exemple, stockée dans le registre temporaire d'adresses 22' pour exploitation par le circuit 21.

La quantité aléatoire IRV est stockée par le microprocesseur dans une mémoire interne. Cette quantité change, de préférence, à chaque nouvelle écriture d'une même variable dans la mémoire 13. Plusieurs quantités IRV peuvent donc avoir besoin d'être stockées par le microprocesseur, par exemple dans des registres volatiles internes, avec une identification de la variable concernée (ou de son adresse si celle-ci est fixe) afin d'être en mesure de contrôler l'intégrité lors de la lecture. En variante, seules des variables considérées comme sensibles du point de vue du contrôle d'intégrité sont considérées comme des données auxquelles affecter une quantité aléatoire par le décodeur 42, les autres variables étant traitées comme des instructions (avec la prise en compte de la quantité fixe).

La figure 5 représente, de façon très schématique et sous forme de blocs, par une vue à rapprocher de la figure 3, un mode de réalisation fonctionnel du contrôleur d'intégrité 40 selon la présente invention dans une phase de lecture d'informations dans la mémoire 13 (MEM). Par rapport à la figure 4, un comparateur 24 (COMP) fournissant l'indicateur d'intégrité ICF à l'unité centrale (non représentée) compare la signature MAC stockée avec le bloc d'information dans la mémoire 13 avec une signature courante calculée par la fonction 21. Cette signature courante est obtenue à partir de l'adresse ADDRESS (au moins partielle), du contenu INFO (au moins partiel) du bloc lu dans la mémoire, de la clé de session SKEY et, s'il s'agit de données variables identifiées par le décodeur 42, de la quantité aléatoire IRV ayant servi lors du stockage ou, dans le cas contraire, d'une quantité fixe (par exemple, 0).

En reprenant l'exemple d'une valeur d'un compteur constituant la variable à stocker dans la mémoire externe, à chaque boucle du compteur, la donnée aléatoire IRV est générée et a donc une forte probabilité d'être modifiée, ce qui empêche le fraudeur éventuel de bloquer une mise à jour de la donnée dans la mémoire afin de réutiliser cette variable ultérieurement.

La taille (nombre de bits) à donner à la quantité aléatoire IRV n'a pas besoin d'être très importante. Une quantité aléatoire de quelques bits (par exemple, 8 bits) suffit dans la mesure où, même si un fraudeur éventuel essaie, par exemple, les 256 valeurs possibles pour forcer le système, le microprocesseur reprendra une clé de session différente à la première initialisation qui va suivre une première détection d'erreur. Par conséquent, une nouvelle clé de session sera également prise et ne permettra pas au fraudeur de poursuivre avec le balayage des quantités aléatoires possibles. De plus, lors d'une réinitialisation, le contenu de la mémoire externe, qui est une mémoire vive est généralement effacé, de même que les quantités aléatoires stockées temporairement par le microprocesseur.

Selon une variante de réalisation, l'empreinte (MAC) elle-même est stockée dans une mémoire interne, de préférence volatile, du microprocesseur. Cette variante est plus particulièrement destinée au cas où la taille de l'empreinte est relativement faible, pour être compatible avec les tailles de mémoires généralement limitées qui sont internes à un microprocesseur.

Bien entendu, la présente invention est susceptible de diverses variantes et modifications qui apparaîtront à l'homme de l'art. En particulier, la mise en oeuvre pratique de l'invention que ce soit par des moyens matériels et/ou logiciels à partir des indications fonctionnelles données ci-dessus est à la portée de l'homme du métier en utilisant des outils en eux-mêmes connus. De plus, le choix de la fonction de calcul de la signature en fonction des capacités de calcul du microprocesseur et des capacités de mémorisation ainsi que du niveau de sécurité souhaité est à la portée de l'homme du métier. Parmi les algorithmes susceptibles d'être utilisés pour un tel calcul, on notera les fonctions dites de Hash, les calculs de parité, etc.

## Revendications

1. Procédé d'enregistrement d'au moins un bloc d'informations variables (INFO) dans une première mémoire volatile (13) externe à un microprocesseur (1), **caractérisé en ce qu'**il consiste à calculer et à mémoriser une signature (MAC) numérique prenant en compte :
au moins partiellement l'adresse (ADDRESS) et le contenu dudit bloc d'information dans la mémoire ; et
au moins une première quantité numérique aléatoire (IRV) interne au microprocesseur.

2. Procédé selon la revendication 1, dans lequel une signature numérique (MAC) d'au moins un bloc d'informations non variables (INFO) à stocker dans la première mémoire (13) prend en compte, à la place de ladite première quantité (IRV), au moins une deuxième quantité numérique fixe.

3. Procédé selon la revendication 1 ou 2, dans lequel ladite quantité aléatoire (IRV) est générée de façon aléatoire à chaque mise à jour dudit bloc d'informations variables (INFO) dans la première mémoire (13).

4. Procédé selon l'une quelconque des revendications 1 à 3, dans lequel ladite quantité aléatoire (IRV) est stockée de façon volatile dans le microprocesseur (1).

5. Procédé selon l'une quelconque des revendications 1 à 4, dans lequel ladite signature (MAC) est stockée, avec ledit bloc d'informations (INFO), dans la mémoire externe (13).

6. Procédé selon l'une quelconque des revendications 1 à 4, dans lequel ladite signature (MAC) est stockée de façon volatile dans le microprocesseur (1).

7. Procédé selon l'une quelconque des revendications 1 à 6, dans lequel ladite signature (MAC) prend en outre en compte une clé numérique (SKEY) modifiée à chaque nouvelle session d'un même programme exécuté par le microprocesseur (1) et/ou à chaque initialisation de ce dernier.

8. Procédé de vérification du contenu d'au moins un bloc d'informations (INFO) lu dans une mémoire volatile externe (13) à un microprocesseur (1), **caractérisé en ce qu'**il consiste à comparer une signature (MAC) mémorisée lors de l'enregistrement dudit bloc, à une signature courante calculée conformément à l'une quelconque des revendications 1 à 7.

9. Microprocesseur (1) comportant des moyens (21) de calcul de signature pour stockage d'un bloc d'informations (INFO) dans une mémoire volatile (13) externe au microprocesseur, **caractérisé en ce qu'**il comporte des moyens pour la mise en oeuvre du procédé selon l'une quelconque des revendications 1 à 8.
